# EUROPÄISCHE PATENTSCHRIFT

(11) **EP 0 529 047 B1**
(45) Veröffentlichungstag und Bekanntmachung des Hinweises auf die Patenterteilung: **13.09.1995**
(21) Anmeldenummer: 92906854.2
(22) Anmeldetag: 20.03.1992
(51) Int. Cl.: F16D 1/08, F16B 2/14

(54) **WELLE-NABE-VERBINDUNG**
SHAFT-HUB LINKAGE
LIAISON ARBRE-MOYEU

(30) Priorität: 22.03.1991 DE 4109530
(43) Veröffentlichungstag der Anmeldung: 03.03.1993
(73) Patentinhaber: Kühl, Hans, D-73207 Plochingen (DE)
(72) Erfinder: Kühl, Hans, D-73207 Plochingen (DE)
(74) Vertreter: Müller-Boré & Partner Patentanwälte
(86) Internationale Anmeldenummer: EP9200623
(87) Internationale Veröffentlichungsnummer: WO9216763

(56) Entgegenhaltungen:
- DE-A- 2 354 902
- FR-A- 652 004
- GB-A- 2 022 214
- US-A- 2 584 740

## Beschreibung

Die Erfindung betrifft eine Welle-Nabe-Verbindung, bei welcher auf der Umfangsfläche der Welle eine Mehrzahl von keilförmigen Erhebungen und auf der Innenumfangsfläche der Nabe eine entsprechende Anzahl von keilförmigen Ausnehmungen angeordnet ist.

Die Erfindung ist nicht auf drehende Welle-Nabe-Verbindungen beschränkt. Sie betrifft auch feste Verbindungen zwischen sich nicht drehenden Teilen wie etwa Rohren und Zapfen. Insoweit ist im Sinne der vorliegenden Erfindung unter Welle auch ein Zapfen und unter Nabe auch ein Rohr zu verstehen.

Eine bekannte derartige Welle-Nabe-Verbindung (DE 95 101) weist auf der Welle eine Vielzahl von in Umfangsrichtung der Welle ansteigenden Keilflächen auf, die mit entsprechenden Keilflächen in Naben zusammenwirken. Durch die Vielzahl von Keilflachen soll ein einfaches Verändern der Winkelstellung der Exzenter, Hubdaumen u. dergl. tragenden Naben auf der Welle erreicht werden. Die Keilflächen folgen zur Achse der Welle exzentrischen Kreisen oder Evolventen. Damit kann nur Linienberührung erreicht werden mit der Folge extrem hohen Flächendrucks und begrenzter Übertragbarkeit von Drehmoment. Die aus den Maßangaben der Schrift entnehmbare Steigung von etwa 1:20 führt zu einem gewissen Verklemmen der Naben auf der Welle, das ausreicht, ein Springen der Naben zu verhindern, wenn Daumen ihre Auflage überlaufen. Sie führt jedoch nicht zu einer haltbaren Verbindung zwischen Naben und Welle, durch die in beiden Drehrichtungen annähernd gleiche Drehmomente übertragen werden können.

Der Erfindung war daher die Aufgabe gestellt, eine Welle-Nabe-Verbindung der eingangs genannten Art so weiterzubilden, daß in beiden Drehrichtungen möglichst große Kräfte übertragen werden Können.

Diese Aufgabe wird durch die Merkmale des kennzeichnenden Teils des Hauptanspruches gelöst. Durch gegenseitige Relativbewegung der mit den Keilflächen versehenen Teile Welle und Nabe, insbesondere durch Verdrehen, in gewissen Ausführungsformen der Erfindung auch durch Verschieben in Richtung der Achse der Welle, tritt bei Berühren einander gegenüberliegender Keilflächen auf ihren jeweils ganzen Flächen zunächst ein Zentrieren von Welle und Nabe zueinander und bei weiterer Bewegung selbsthemmender Reibschluß zwischen den Keilflächen und damit zwischen Welle und Nabe ein. Die Relativbewegung endet spätestens dann, wenn das eingeleitete Drehmoment nicht mehr ausreicht, den Reibschluß zu überwinden und damit Formschluß erreicht ist. Der Reibschluß gestattet der erfindungsgemäßen Welle-Nabe-Verbindung, neben Drehmomenten auch erhebliche Axialkräfte in Richtung der Achse der Welle aufzunehmen.

Die logarithmische Spirale ist diejenige ebene Kurve, die über ihren ganzen Verlauf gleiche Steigung aufweist. Im vorliegenden Falle führt dies dazu, daß bei gegenseitiger Relativbewegung derart geformter Keilflächen auf einer Welle und einer Nabe um eine gemeinsame Achse alle Punkte der Keilflächen sich gleichzeitig berühren und zu tragen beginnen. Die logarithmische Spirale ist die mathematisch exakte Form dieser Kurve. In der Praxis wird das erstrebte Ergebnis aber auch mit der logarithmischen Spirale mehr oder minder angenäherten Kurven erreicht, da geringe Abweichungen vom idealen Verlauf durch die elastische und/oder plastische Verformbarkeit des Materials der Keilflächen ausgeglichen wird. So können auch Kreisbögen mit Radien, Zentren und Zentriwinkeln gefunden werden, die bei nach ihnen geformten Keilflächen nur unmerkliche Abweichungen vom Idealfall aufweisen. Im folgenden wird daher meist vereinfachend von einem Kreiskeilprofil gesprochen.

Die Höhe der Selbsthemmung einer Keilverbindung hängt außer von der Steilheit der Keile auch von den Materialeigenschaften der Keile, insbesondere von ihrem elastischen/plastischen Verhalten und von der Oberflächenbeschaffenheit der Keile, also bspw. von ihrer Rauhigkeit ab. Erfindungsgemäß ist die Steilheit der Keilflächen unter Berücksichtigung dieser Materialeigenschaften so gewählt, daß eine so hohe Selbsthemmung erreicht wird, daß ihr Lösemoment annähernd so hoch ist wie das Moment, mit dem sie herbeigeführt worden ist.

Es hat sich gezeigt, daß eine Steigung von 1:50 und weniger gemäß Anspruch 2 zu einer so hohen Selbsthemmung zusammenwirkender Keilflächen führt, daß in beiden Drehrichtungen annähernd gleich große Drehmomente übertragbar sind, daß die Welle-Nabe-Verbindung also praktisch drehrichtungsunabhängig ist. Steigungen von weniger als 1:200 führen dagegen zu einer Selbsthemmung, die nur sehr schwer wieder lösbar ist und bei der auch in Abhängigkeit von den Materialeigenschaften die Gefahr des "Durchrutschens" gegeben sein kann.

Der Rücken der Keile, in dem sie von ihrem höchsten Punkt auf den tiefsten Punkt des benachbarten Keils abfallen, ist für die Funktion der Erfindung ohne Bedeutung. Er kann in einem Radius der Welle bzw. Habe liegen und kantig sein. Fertigungstechnisch ist jedoch ein S-förmig geschwungener Übergang von Vorteil, der sowohl beim Herstellen des Kreiskeilprofils durch Fräsen als auch durch Strangpressen einfacher herzustellen ist.

Der Betrag der Relativbewegung zwischen Welle und Nabe zum Herbeiführen der Verbindung wird abhängig von den verwendeten Werkstoffen, den Abmessungen und der gewünschten Kraftübertragung gewählt und beträgt im Falle der Drehbewegung vorzugsweise 5° bis 25°. Dieser Verdrehwinkel beginnt erst, wenn sich gegenüberliegende Keilflächen aneinanderlegen, d.h. wenn ein gegebenenfalls vorhandenes Spiel zwischen Welle und Nabe durch eine anfängliche, betragsmäßig nicht zu berücksichtigende Relativbewegung aufgezehrt worden ist.

Durch die Relativbewegung zwischen Welle und Nabe werden die Keilflächen von Welle und Nabe nicht nur aneinandergepreßt. Es erfolgt auch ein Verdrängen des Materials von Welle und Nabe im Bereich der Keilflächen. Ob die Materialverdrängung nur in der Nabe oder nur in der Welle oder in beiden auftritt, hängt von dem für Welle bzw. Nabe gewählten Materialhärtegrad ab. Für das Material von Welle und Nabe werden bevorzugterweise sich verfestigende Werkstoffe verwendet. Baustähle hoher Festigkeit und legierte Vergütungsstähle zeigen im plastischen Bereich eine ausgeprägte Verfestigung. Baustähle niedriger Festigkeit und einige unlegierte Vergütungsstähle Zeigen hingegen ein idealplastisches Verhalten, was bei der vorgeschlagenen Welle-Nabe-Verbindung aufgrund der hohen Flächenpressung bzw. Fugendruckes zwischen Welle und Nabe nur unter bestimmten Umständen von Vorteil ist. Die verfestigenden Eigenschaften der genannten Werkstoffe sorgen für eine sehr große Pressung zwischen Welle und Nabe und somit für ein entsprechend großes übertragbares Drehmoment. Je nach den Anforderungen, die an die Welle-Nabe-Verbindung gestellt werden, kann sich aber auch der Einsatz von Werkstoffen als vorteilhaft erweisen, die ein elastisch-idealplastisches Spannungs-Dehnungs-Verhalten aufweisen.

Durch gleiche Steigung zusammenwirkender Keilflächen gemäß Anspruch 3 wird erreicht, daß alle Bereiche der Keilflächen gleiche Flächenpressung aufweisen und damit ohne Überschreiten einer maximalen Flächenpressung in Bereichen einer Keilflächenpaarung insgesamt maximale Tragkraft erreicht wird. In Fällen, in denen aus bestimmten Gründen unterschiedliche Flächenpressungen erwünscht sind, kann dies gemäß Anspruch 4 durch entsprechend unterschiedliche Steigungen zusammenwirkender Keilflächen erreicht werden.

Die vorgeschlagene Welle-Nabe-Verbindung kann aber nicht nur Drehmomente übertragen, sondern infolge des auftretende Reib- und Stoffschlusses auch erhebliche Axialkräfte. Dies ist insbesondere dann der Fall, wenn gemäß Anspruch 5 die Keilflächen zur Achse von Welle und Nabe geneigt sind, also mit anderen Worten kegelig ausgeführt sind. Dadurch ist die Möglichkeit geboten, das Herbeiführen der Selbsthemmung nicht nur durch Verdrehen von Welle und Nabe zueinander, sondern auch durch axialen Verschieben der beiden Teile zueinander zu erreichen. So kann sich die Welle zu dem in der Nabe befindlichen Ende hin zur Aufnahme hoher Schubkräfte bspw. für die Aufnahme von Drehwerkzeugen verjüngen oder zur Aufname hoher Zugkräfte bspw. für Bohrgestänge verdicken. Bei entsprechend enger Passung ist im letzten Fall ein Zusammenfügen von Welle und Nabe nur auf thermischem Wege möglich. In diesem Falle ergeben sich besonders hohe übertragbare Zugkräfte.

Auch eine ein- oder mehrgängige schraubenförmige Anordnung der Keilflächen gemäß Anspruch 6 bietet die Möglichkeit, das Selbsthemmen der Welle-Nabe-Verbindung durch gegenseitiges axiales Verlagern von Welle und Nabe zu erreichen und bietet darüber hinaus den Vorteil, daß sich die Selbsthemmung bei Überlagerung von Drehbeanspruchung und Schub/Zugbeanspruchung der Welle-Nabe-Verbindung noch verstärkt.

Die der Erfindung gestellte Aufgabe kann bereits mit je zwei Keilflächen auf Welle und Nabe erfüllt werden. Eine Anordnung von drei oder mehr Keilflächen gemäß Anspruch 7 bietet jedoch den Vorteil, daß durch die Keilflächen ein genaues Zentrieren von Welle und Nabe zueinander erfolgt. Besonders vorteilhaft sind je drei Keilflächen, weil sie eine optimale Zentrierung ergeben und flache Steigungen bei großen, ein Durchrutschen ausschließenden Keilhöhen erlauben.

Die mehreren Keilflächen können in Umfangsrichtung gleich lang sein, d.h. sich über gleiche Zentriwinkel erstrecken und gleichmäßig, d.h mit gleichem gegenseitigem Abstand um den Umfang von Welle und Nabe verteilt sein. In manchen Fällen ist jedoch auch eine andere Anordnung vorteilhaft. So kann durch unsymmetrische Ausführung oder Anordnung der Keilflächen erreicht werden, daß Welle und Nabe schlüsselartig nur in einer bestimmten Winkelstellung zueinander in Eingriff gebracht werden können.

Wenn Welle und/oder Nabe aus einem Material, bspw. Kunststoff, bestehen, mit dessen Eigenschaften erforderliche Parameter wie bspw. Flächenpressung nicht erreichbar sind, können die Keilflächen gemäß Anspruch 8 in Manschetten ausgeformt sein, die auf die Welle aufsetzbar bzw. in die Nabe einsetzbar sind. Auch wenn durch häufiges Lösen der Welle-Nabe-Verbindung die Keilflächen verschleißen, ist diese Lösung mit auswechselbaren Manschetten von Vorteil.

Um die Selbsthemmung zu erhöhen und/oder zu sichern, kann gemäß Anspruch 9 mindestens eine der Keilflächen mit einer an sich bekannten Mikroverzahnung versehen sein, um in einer wählbaren Vorzugsrichtung durch einen Fischschuppeneffekt einen noch höheren Reibschluß zu erzielen.

Durch den hohen Fugendruck zwischen den miteinander in Wirkverbindung tretenden Keilflächen erfolgt eine Kaltverschweißung zwischen Welle und Nabe, so daß mit der erfindungsgemäßen Welle-Nabe-Verbindung neben Form- und Kraftschlüssigkeit auch eine Stoffschlüssigkeit erreicht werden kann. Dies ist dann von Vorteil, wenn vorgesehen ist, daß die Welle-Nabe-Verbindung nicht wieder gelöst werden soll. Durch besondere Behandlung der Keilflächen gemäß Anspruch 10 wie bspw. Polieren kann diese Kaltverschweißung gegebenenfalls erleichtert und beschleunigt werden.

Ein Lösen der Welle-Nabe-Verbindung kann gemäß Anspruch 11 auch dadurch verhindert werden, daß der sich beim Verlagern der Keilflächen zum Erreichen der Verbindung zwischen den Rückseiten der Keilflächen bildende Spalt verfüllt wird. Dadurch wird erreicht, daß Welle und Nabe nicht gegeneinander zurückverdreht werden können, um die Selbsthemmung zu lösen. Hierdurch ergibt sich in der hinsichtlich des übertragbaren Drehmomentes prinzipiell etwas ungünstigeren Rück-Drehrichtung Formschluß. Für die Verfüllung bietet sich insbesondere Kunststoffmaterial an, das nahezu inkompressibel ist.

Die Steigung der Keilflächen und der Abstand zwischen den Keilflächen in Welle und Nabe wird in der Regel so gewählt, daß das vorgesehene übertragbare Drehmoment der Welle-Nabe-Verbindung erreicht wird, bevor die Keilflächen etwa durch Materialverdrängung untereinander durchgleiten können und dadurch die Wirkung der Verbindung von Welle und Nabe verfehlen. In manchen Fällen ist es jedoch vorteilhaft, gemäß Anspruch 12 die Anordnung so zu treffen, daß als Drehmomentsicherung bei Überschreiten eines bestimmten Drehmomentes ein Durchgleiten der Welle-Nabe-Verbindung erfolgen kann. Die erfindungsgemäße Welle-Nabe-Verbindung enthält dann eine Art Schutz gegen Zerstörung durch Überlast. In Verbindung hiermit kann auch eine Sicherheitsabschaltung des Antriebs der Welle-Nabe-Verbindung ausgelöst werden.

Die Keilflächen können durch Abtragung von Material wie Fräsen, Hobeln oder dergl. erzeugt oder besonders kostengünstig stranggepreßt oder stranggezogen hergestellt werden.

Die Keilflächen brauchen nicht den ganzen Umfang der Welle einzunehmen. In manchen Fällen ist es zulässig oder sogar erwünscht, zwischen den Keilflächen Abstände vorzusehen, in deren Bereich die Welle zylindrisch ausgeführt sein kann.

Die erfindungsgemäße Welle-Nabe-Verbindung stellt aufgrund ihrer besonderen Ausgestaltung zumindest eine Mischform zwischen kraft- und formschlüssiger Verbindung dar. Der Formschluß ergibt sich durch die Ausgestaltung der Keilflächen und durch die Tatsache, daß die Relativverschiebung zwischen Welle und Nabe einen Grad erreicht, der infolge der erreichten Flächenpressung kein weiteres Relativverschieben mehr zuläßt. Vor Erreichen dieses Punktes liegt bereits Reibschluß vor, der auch in der entgegengesetzten Drehrichtung ein Drehmoment zu übertragen gestattet, das sich bei Erreichen des genanntes Formschlusses so weit steigert, daß es dem durch Formschluß zu übertragenden Drehmoment entspricht oder nahezu entspricht.

Gegenüber den anderen bekannten Arten derartigen Verbindungen wie stoffschlüssigen - bspw. Schweiß- oder Lötverbindungen - weist sie den Vorteil der einfacheren Montage und der leichten Lösbarkeit auf. Gegenüber reibschlüssigen Welle-Nabe-Verbindungen - wie bspw. Spannsätzen - hat sie den Vorteil größeren übertragbaren Momentes, einfacheren Aufbaues und damit billigerer Herstellung sowie geringeren Platzbedarfes und Gewichtes. So weist bspw. ein konischer Spannsatz einen Querschnitt, eine Länge und ein Gewicht auf, das seinen Einsatz oftmals ausschließt. Ihre Anforderungen an Maßhaltigkeit (Toleranzen) sind vergleichsweise gering, wo vergleichbare Verbindungen Toleranzen im µ-Bereich erfordern, begnügt sie sich mit Werten im 1/10-mm-Bereich.

Ein besonderer Vorteil der vorgeschlagenen Welle-Nabe-Verbindung besteht darin, daß je nach Belastung und Auslegung eine Fertigung mit sehr großem Spiel, d.h. großer Spaltbreite zwischen den Keilflächen möglich ist und dadurch die Montage erheblich erleichtert wird.

Eine geeignete Maßnahme, das Fügen der erfindungsgemäßen Welle-Nabe-Verbindung insbesondere bei sehr flachen Steigungen zu erleichtern, besteht darin, die Steigung der Keilflächen in Fügerichtung zunehmen zu lassen. So kann bspw. die Steigung am Wellenende 1:200 betragen und sich - bezogen auf den gleichen Grunskreis - bis zum anderen Ende der Keilflächen allmählich auf 1:100 steigern. Dies führt am Ende der Welle zu einem das Fügen erleichternden größeren Spiel zwischen den Keilflächen in Welle und Nabe.

Je größer andererseits das Spiel oder der Spalt zwischen sich gegenüberliegenden Keilflächen ist, ein um so größerer Betrag der Relativbewegung ist für die Überwindung dieses Spiels erforderlich und geht als Wirkfläche für den Reib- oder Formschluß verloren. Wenn es wichtig ist, diesen Verlust klein zu halten, weil die Flächenpressung auf den verbleibenden Keilflächen sonst zu groß werden würde, sollte das Spiel möglichst gering gehalten werden und insbesondere gegen Null gehen. Es ist darüber hinaus sogar möglich, vor dem Zusammenfügen von Welle und Nabe das Spiel zwischen den Keilflächen negativ auszubilden, d.h. den Durchmesser der Nabenbohrung geringer auszubilden als den entsprechenden Durchmesser der Welle. Ein Zusammenfügen von Welle und Nabe ist dann nur bei thermischem Fügen von Welle und Nabe möglich, d.h. einem Erwärmen der Nabe, um das negative Spiel mindestens zu egalisieren. In diesem Fall zeigt sich ein weiterer Vorteil der erfindungsgemäßen Welle-Nabe-Verbindung: Überschreitet die Nabe beim thermischen Fügen eine vom Werkstoff abhängige Grenztemperatur, so ist ein deutlicher Abfall der Streckgrenze zu erwarten, wodurch sich bei herkömmlichen Welle-Nabe-Verbindungen die Übertragungsfähigkeit deutlich vermindert. Bei der vorliegenden Welle-Nabe-Verbindung dagegen ist ein Herabsetzten der Streckgrenze nicht von vornherein nachteilig, vielmehr stellt sich hier bei Verwendung entsprechender Baustähle mit hoher Festigkeit bzw. von legierten Vergütungsstählen um so eher die verfestigende Verformung ein.

Die Kerbwirkungszahlen der erfindungsgemäßen Welle-Nabe-Verbindung gegen Biegung und Torsion können zudem sehr klein gehalten werden, da durch die drehende Relativbewegung von Welle zu Nabe der Raum für eine geometrisch optimierte Auslegung der Übergänge der Keilflächen vorhanden ist.

In den Figuren der Zeichnung sind das Prinzip der Erfindung und einige vorteilhafte Ausführungsbeispiele schematisch dargestellt. Dabei sind die Keile zur Verdeutlichung stark überhöht und die Keilflächen zur Vereinfachung als Kreisbogen gezeichnet. Es zeigen
- Fig. 1: die Stirnansicht einer Welle/Nabe-Paarung in Füge-, in
- Fig. 2: in Verbindungsstellung;
- Fig. 3 und 4: Diagramme, die die übertragbaren Momente in Abhängigkeit vom Verdrehwinkel zeigen;
- Fig. 5 und 6: Füge- bzw. Verbindungsstellung einer anderen Ausführungsform der Erfindung;
- Fig. 7 und 8: die Ansichten zweier Wellenenden mit geneigten und schraubenförmig verlaufenden Keilflächen;
- Fig. 9: den Längsschnitt durch eine Welle-Nabe-Verbindung mit Keilprofil auf Manschetten;
- Fig. 10 bis 12: Schnittdarstellungen einer Einrichtung zum Verspannen der erfindungsgemäßen Welle-Nabe-Verbindung, in Fig. 11 in der Ebene I-I, in Fig. 12 in Ebene II-II der Fig. 10;
- Fig. 13: den Längsschnitt durch die Endabschnitte zweier Streckwalzenabschnitte von Spinnmaschinen,
- Fig. 14: den Teillängsschnitt durch ein Gelenk einer Wirkmaschine,
- Fig. 15: die Ansicht einer Einzelheit des Gelenks der Fig. 14,
- Fig. 16 und 17: Längsschnitt bzw. Stirnansicht einer Nockenwelle,
- Fig. 18: den Längsschnitt durch eine Getriebewelle,
- Fig. 19: den Längsschnitt durch eine Kurbelwelle eines Verbrennungsmotors,
- Fig. 20: die Ansicht eines Geländers,
- Fig. 21 und 22: eine Einzelheit des Gegenstandes der Fig. 19 in Ansicht aus zwei unterschiedlichen Richtungen, jeweils unter Verwendung der erfindungsgemäßen Welle-Nabe-Verbindung.

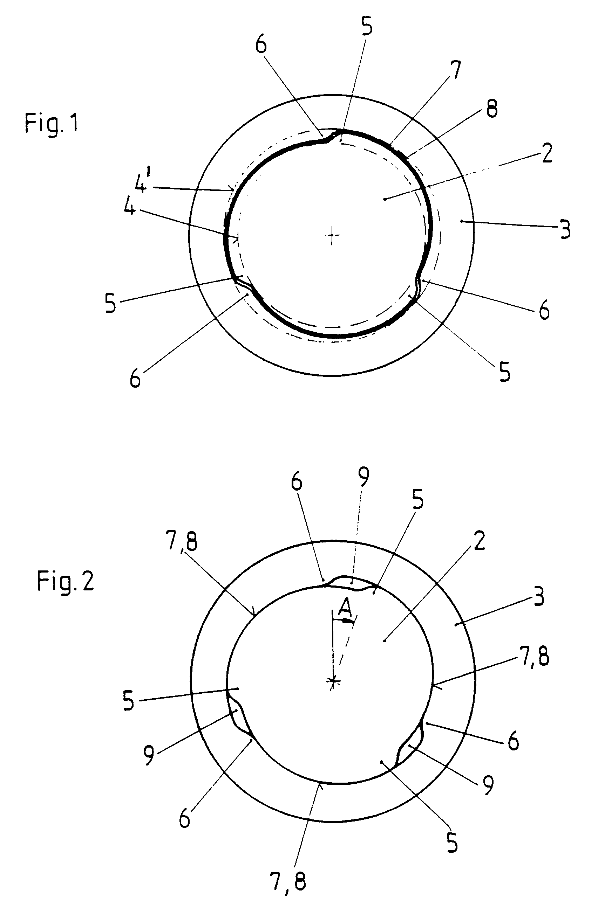

Die Welle-Nabe-Verbindung verbindet gemäß Fig. 1 und 2 eine Welle 2 mit einer Nabe 3. Bei der Nabe 3 kann es sich um ein Rad, eine Nocke, eine andere Welle usw. handeln - im folgenden sind noch Beispiele für derartige Wellen und Naben beschrieben. Mindestens in einem Bereich, in dem Welle 2 und Nabe 3 ineinandergeschoben sind und der sich in Richtung der Achse der Welle über eine etwa dem Durchmesser der Welle entsprechende Länge erstreckt, sind Welle 2 und Nabe 3 im Querschnitt nicht kreisrund, sondern weisen über einen Grundkreis 4 bzw. 4' je drei, gleiche, vorspringende Keile 5 bzw. 6 auf. Die Keile 5 und 6 steigen mit flacher Steigung an und fallen von ihrem höchsten Punkt steil zum tiefsten Punkt des benachbarten Keils ab. Ihre ansteigenden Keilflächen 7, 8 folgen im Idealfall dem Verlauf einer logarithmischen Kurve, mit anderen Worten, ihre Steigung ist in allen Punkten entlang ihres Verlaufes gleich und gleichbleibend. Der Abstand zwischen den Keilflächen 7 der Welle 2 und den Keilflächen 8 der Nabe 3 ist gering, jedenfalls wesentlich geringer als die Differenz zwischen dem Abstand des höchsten Punktes einer Keilfläche 7 der Welle 2 und dem Abstand des höchsten Punktes einer Keilfläche 8 der Nabe von der Längsachse der Welle 2. Welle und Nabe können somit leicht ineinandergeschoben werden.

Um Welle 2 und Nabe 3 fest miteinander zu verbinden, werden die beiden Teile gegeneinander verdreht und zwar die Welle 2 in Richtung des Pfeiles A im Uhrzeigersinn oder die Nabe 3 gegen den Uhrzeigersinn oder beide in der jeweiligen Drehrichtung. Dadurch vermindert sich der Abstand zwischen den Keilflächen 7 der Welle 2 und den Keilflächen 8 der Nabe 3, bis alle Keilflächen jeweils paarweise aneinanderliegen. In dieser Stellung ist die Zentrierung der Nabe 3 zur Welle 2 erreicht. Der Winkel, über den diese Drehung erfolgt, hängt vom Spiel zwischen den beiden Teilen ab.

Dank der Besonderheit der gleichen Steigung einer logarithmischen Spirale erfolgt die Berührung der Keilflächen 7 und 8 jeweils sogleich auf ihrer ganzen Fläche. Bei weiterer Drehung tritt Reibschluß und rasch zunehmende, überall gleich hohe Flächenpressung zwischen den Keilflächen ein. Die Drehbewegung wird fortgesetzt, bis entweder das vorgesehene zu übertragende Moment oder die vorgesehene Winkelstellung zwischen Welle 2 und Nabe 3 erreicht ist. Der Winkel, über den diese kraftschlüssige Drehbewegung erfolgt, wird durch entsprechende Wahl der Steigung der Keilflächen, der Eigenschaften des Materials der Keilflächen, der Maßverhältnisse usw. zu etwa 5° bis 25° gewählt. Die erreichte Endstellung ist in Fig. 2 dargestellt. Durch die Relativbewegung der Keile 5 und 6 haben sich deren abfallende Flanken voneinander entfernt und einen Freiraum 9 gebildet.

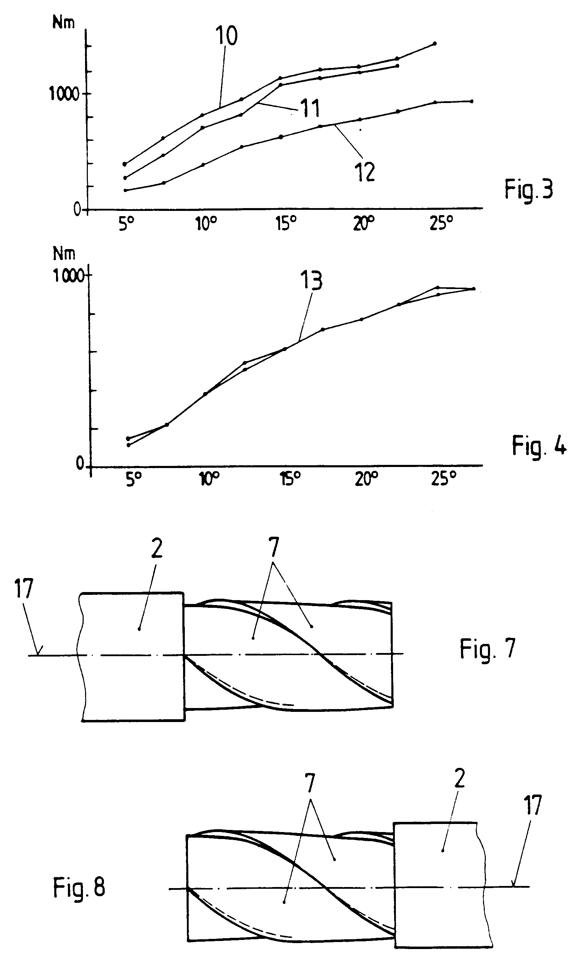

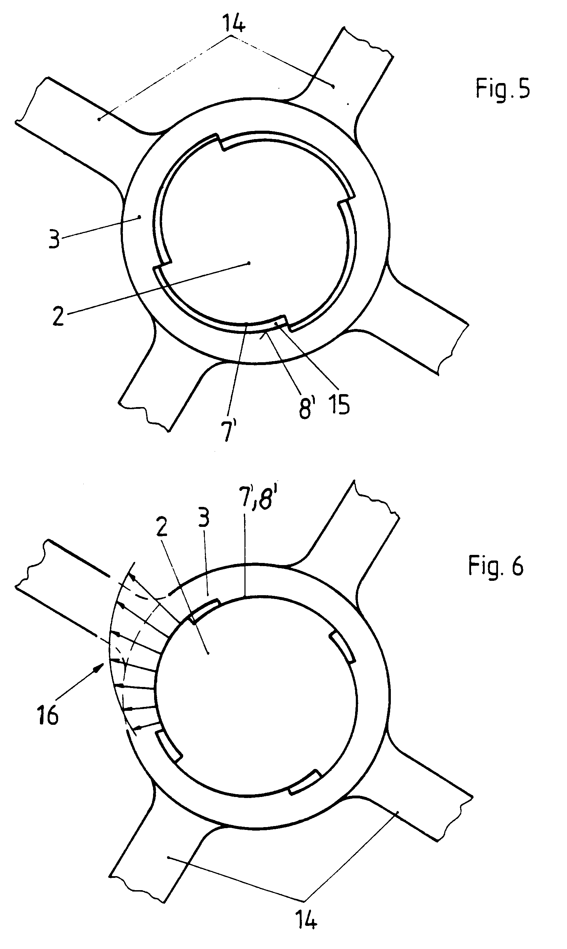

In den Diagrammen der Fig. 3 und 4 ist für einige Welle/Nabe-Paarungen über dem Verdrehwinkel in der Abszisse das übertragbare Drehmoment in der Ordinate aufgetragen. Das Material von Welle und Nabe ist in allen Fällen St50, der Wellen-Durchmesser und die Nabenlänge jeweils 30 mm. Linie 10 in Fig. 3 zeigt die Momente einer Welle-Nabe-Verbindung mit je drei Keilflächen einer Steigung von 1:50, die Linie 12 mit einer Steigung von 1:100. Linie 11 zeigt die Momente bei Verwendung von je sechs Keilflächen und einer Steigung von 1:50.

In Fig. 4 sind die Momente beim Verdrehen und beim Lösen einer Welle/Nabe-Paarung mit je drei Keilflächen der Steigung 1:100 und im übrigen den oben genannten Parametern dargestellt. Es zeigt sich, daß das Lösemoment praktisch genau so hoch ist wie das in Richtung der Zudrehens der Welle-Nabe-Verbindung, die Momentenlinien fallen in der Linie 13 zusammen. Die erfindungsgemäße Welle-Nabe-Verbindung ist demnach eine feste Verbindung in beiden Drehrichtungen, also drehrichtungsunabhängig.

In den Fig. 5 und 6 ist ein Ausführungsbeispiel einer erfindungsgemäßen Welle-Nabe-Verbindung mit je vier Keilflächen 7' bzw. 8' mit unterschiedlichen Steigungen und einer Nabe 3 mit vier Speichen 14 dargestellt. Die unterschiedlichen Steigungen der Keilflächen 7' in der Welle 2 und der Keilflächen 8' in der Nabe 3 führt zu einem keilförmigen Spalt 15 zwischen sich gegenüberliegenden Keilflächen. Bei Verdrehen von Welle 2 und Nabe 3 gegeneinander kommen zuerst die Bereiche der Keilflächen in Anlage, die geringeren Abstand haben und beginnen, Flächenpressung aufzubauen. Im weiteren Verlauf der Verdrehung können infolge Materialverdrängung in den bereits aneinanderliegenden Bereichen der Keilflächen 7', 8' auch die anderen Bereiche in Anlage kommen. Infolge des keilförmigen Spaltes 15 bzw. des verzogerten In-Anlage-Kommens bestimmter Bereiche baut sich in den Keilflächen unterschiedliche Flächenpressung auf, die durch die unterschiedliche Länge der Maß und Richtung der Flächenpressung repräsentierenden Pfeile 16 angedeutet ist. Die Lage der Keilflächen 7' und 8' und der Speichen 14 zueinander wird so gewählt, daß die höheren Flächenpressungen in den Bereichen der Speichen liegen, in denen sie durch die verstärkende Wirkung der Speichen aufgenommen werden können.

Die Fig. 7 und 8 zeigen Ausführungsformen mit zur Längsachse 17 der Welle 2 geneigten und zusätzlich schraubenförmig verlaufenden Keilflächen 7 und zwar in Fig. 7 derart, daß sich die Welle gegen ihr Ende hin verjüngt. Diese Welle 2 kann durch eine Schraubbewegung in die zugehörige, nicht dargestellte Nabe eingesteckt werden. Die feste Verbindung zwischen Welle und Nabe kann hier sowohl durch gegenseitiges Verdrehen als auch durch Ineinanderdrücken von Welle und Nabe erfolgen. Diese Ausführungsform erscheint vorteilhaft für Aufnahmen von Drehwerkzeugen an Werkzeugmaschinen wie Bohrer, Fräser und dergl. Die Neigung der Keilflächen 7 kann jedoch gemäß Fig. 8 auch so sein, daß sich die Welle 2 gegen ihr Ende verdickt. In dieser Ausführungsform wird der Reibschluß bei Zugbeanspruchung der Welle-Nabe-Verbindung noch erhöht, was für bestimmte Anwendungsfälle der Erfindung von Vorteil ist.

Es versteht sich, daß die Neigung und der Schraubengang der Keilflächen in Welle und Nabe je nach den Erfordernissen des Anwendungsfalles auch jeweils für sich allein einsetzbar sind.

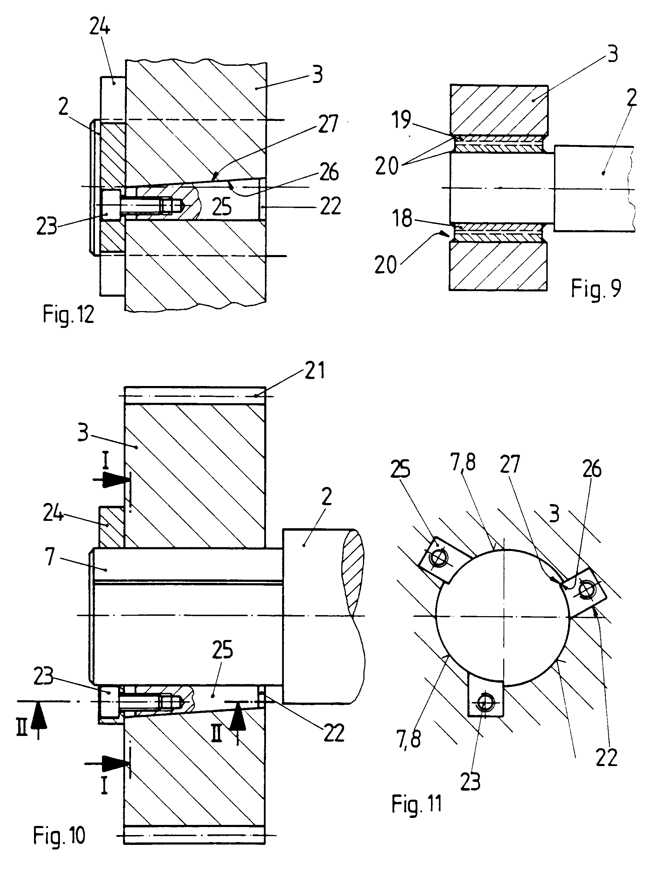

In Fig. 9 ist die Anordnung des Kreiskeilprofils auf Manschetten 18 und 19 dargestellt. Mit der Welle 2 ist eine Manschette 18 fest verbunden, bspw. verklebt, verschweißt oder aufgeschrumpft - diese feste Verbindung ist durch Schweißnahtkehlen 20 angedeutet. Entsprechend ist die Nabe 3 fest mit einer Manschette 19 verbunden. Die Manschette 18 der Welle 2 trägt das Kreiskeilprofil auf der Außenseite, die Manschette 19 der Nabe 3 auf der Innenseite. Welle 2 und Nabe 3 können wie schon beschrieben durch Verdrehen über die Manschetten 18 und 19 fest, aber lösbar miteinander verbunden werden.

Die Manschetten 18 und 19 können aus gleichem oder aus anderem Material wie Welle 2 bzw. Nabe 3 bestehen. In Fällen, in denen Welle und Nabe aus weniger widerstandsfähigem Material wie etwa Kunststoff oder Leichtmatall gefertigt sind, werden die Manschetten vorteilhaft bspw. aus Stahl sein. Wenn die Welle-Nabe-Verbindung häufig befestigt und gelöst werden muß und daher hohem Verschleiß unterliegt, können die Manschetten aus gleichem Material wie Welle und Nabe, aber leicht austauschbar auf diesen befestigt sein. Auch wenn Welle und Nabe aus schwer bearbeitbarem Material bestehen, bietet sich diese Manschetten-Lösung an.

Die Fig. 10 bis 12 zeigen Spannelemente zum Verdrehen der Welle-Nabe-Verbindung, um den Reibschluß herzustellen. Hierzu sind in der Nabe 3 bspw. eines Zahnrades 21 ebenso viele achsparallele Nuten 22 angeordnet, wie die Welle-Nabe-Verbindung Keilflächen 7, 8 aufweist. In den Nuten sind mittels Schrauben 23, die sich an einem gegen das Zahnrad 21 anliegenden Ring 24 abstützen, Keile 25 verschiebbar, die sich wie aus Fig. 12 ersichtlich gegen das Ende der Welle 2 verjüngen. Die Tiefe der Nuten 22 nimmt wie aus Fig. 10 ersichtlich in Richtung auf das Ende der Welle 2 zu, um ein Verklemmen der Keile beim Verschieben zu vermeiden. Die Keile 25 liegen mit einer ihrer Seitenflächen 26 auch an den Rücken 27 der Keilflächen 7 der Welle 2 oder wie nicht dargestellt an den Seitenflächen von Nuten in der Welle 2 an.

Zum Verspannen der Welle-Nabe-Verbindung werden die Keile 25 durch Drehen der Schrauben 23 in Richtung auf das Ende der Welle 2 gezogen und verdrehen dabei infolge ihrer Keilform und ihrer Führung in den Nuten 22 bzw. des Anliegens ihrer Seitenflächen 26 an den Rücken 27 der Keilflächen 7 die Nabe 3 gegen die Welle 2 in dem Sinne, daß der Reibschluß zwischen den Keilflächen 7 und 8 in Welle 2 bzw. Nabe 3 hergestellt wird. Die verspannten Keile zwischen Welle 2 und Nabe 3 verhindern auch sicher ein Rückdrehen und damit ein Lösen des Reibschlusses. Diese Ausführungsform verbindet die Wirkung des geschilderten Vergießens des Freiraumes 9 der Fig. 2 mit dem Vorteil, daß das Blockieren des Zurückdrehens wenn notwendig aufgehoben werden kann.

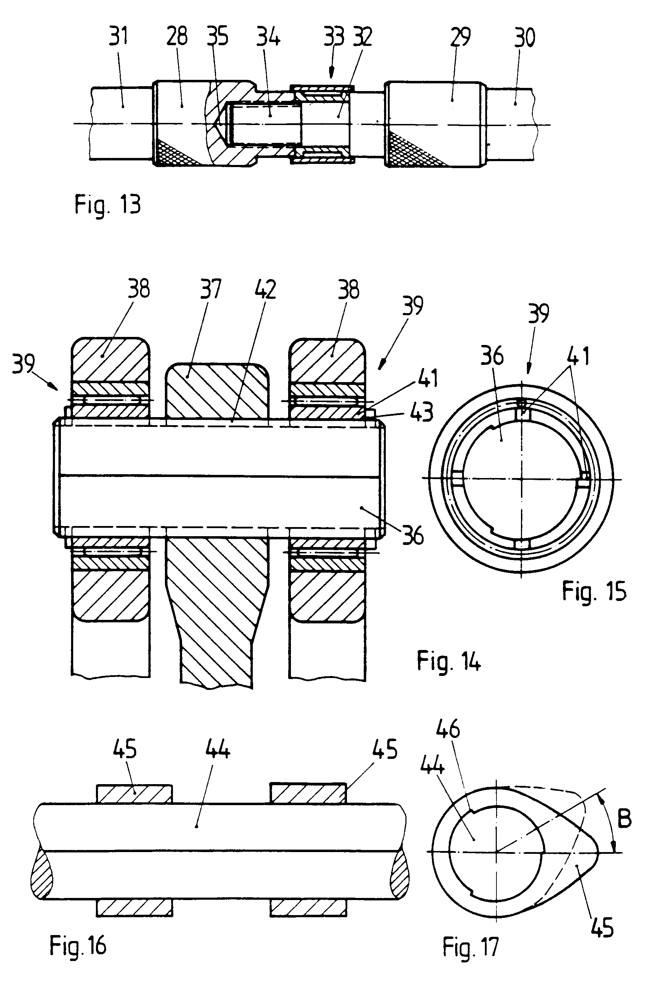

Ein vorteilhafter Anwendungsfall der Erfindung ist die Verbindung von Streckwerkswalzen-Abschnitten. Die teilweise mehr als 30 m langen Verzugswalzen von Spinnereimaschinen wie bspw. Ringspinnmaschinen oder Vorspinnmaschinen (Flyer) bestehen aus kurzen Abschnitten von etwa 600 mm Länge, die an ihren Stoßstellen, die zugleich ihre Lagerstellen sind, drehfest, aber lösbar miteinander verbunden werden müssen. Fig. 13 zeigt das letzte bzw. erste Riffelfeld 28, 29 zweier benachbarter Walzenabschnitte 30, 31. Der Walzenabschnitt 30 weist einen zylindrischen Zapfen 32 auf, auf den der Innenring eines die Walze lagernden Wälzlagers 33 aufgeschoben ist. Gegen sein Ende zu weist der Zapfen 32 im Bereich 34 das erfindungsgemäße (Außen-)Keilprofil mit bspw. drei Keilflächen auf. Die (Naben-)Bohrung 35 des Walzenabschnittes 31 ist mit dem entsprechenden (Innen-)Keilprofil versehen.

Zum Aufbau des ganzen Streckwalzenstranges werden die Wellen darstellenden Zapfen 32 der Walzenabschnitte wie 30 in die Bohrungen 35 der Naben darstellenden Walzenabschnitte wie 31 gesteckt und durch Verdrehen bspw. mittels Streckwerkszangen fest miteinander verbunden. Diese Verbindung kann mittels ihres Reibungsschlusses auch die erfahrungsgemäß häufig an der Eingangswalze erforderlichen Rückhaltemomente aufnehmen, ohne daß die Verbindung sich löst. Bei Bedarf kann die Verbindung aber auch wieder gelöst werden, um bspw. beschädigte Walzenabschnitte auswechseln zu können.

Bisher ist es üblich, die Walzenabschnitte mittels Gewinden zu verbinden. Die erfindungsgemäßen Kreiskeilprofile schwächen die Walzenabschnitte aber deutlich weniger und vermindern damit die spinntechnisch nachteilige Torsion der Walzen unter der Drehmomentbelastung im Betriebszustand. Da die Gewinde bis zum Aneinanderliegen der Stirnflächen der Walzenabschnitte ineinandergedreht werden müssen, müssen die Walzenabschnitte mit sehr engen Längentoleranzen gefertigt werden. Bei Verwendung der erfindungsgemäßen Kreiskeilprofile ist dies nicht notwendig, die Walzenabschnitte können hier in der erforderlichen Längsposition miteinander verbunden werden. Da die erfindungsgemäße Welle-Nabe-Verbindung drehrichtungsunabhängig ist, brauchen nicht wie bei Verwendung von Gewinden für die beiden Maschinenseiten einer Spinnmaschine unterschiedliche Teile gefertigt zu werden.

An einem Wirkmaschinen-Gelenkgetriebe gemäß Fig. 14 war die Aufgabe gestellt, einen etwa 100 mm langen Bolzen 36 aus Vollmaterial oder dickwandigem Rohr mit einem Durchmesser von etwa 25 mm in einem Pleuel 37 dreh- und verschiebefest zu haltern und zu beiden Seiten Gelenkarme 38 auf spielfreien Wälzlagern 39 zu lagern. Hierzu wurden sowohl der Bolzen 36 außen als auch die Innenseite des Pleuels 37 und die Innenringe 41 der Wälzlager 39 innen mit dem erfindungsgemäßen Dreikeil-Profil 42 versehen. Die Steigung des Dreikeil-Profils 42 wurde mit 1:100 oder 1:200 gewählt.

Zur Montage des Gelenkgetriebes wird zunächst der Bolzen 36 in das Auge des Pleuels 37 gesteckt und mittels der zusammenwirkenden Dreikeilprofile 42 durch Verdrehen im Pleuelauge im Pleuel verankert. Dann werden die Wälzlager 39 und die Gelenkarme 38 beiderseits des Pleuels 37 auf den Bolzen 36 aufgesteckt und die Wälzlager durch kontrolliertes Verdrehen ihrer Innenringe 41 an Schlüsselflächen 43 und dadurch bewirktes Aufweiten mittels des Dreikeilprofils 42 sowohl spielfrei gemacht als auch durch Reibschluß auf dem Bolzen 36 verankert. Durch das erfindungsgemäße Merkmal, daß die Steigung der Keilflächen gleichbleibend ist, erfolgt das Aufweiten der Wälzlagerinnenringe über den ganzen Umfang völlig gleichmäßig, ohne daß an einzelnen Stellen ein Klemmen eintreten kann und unter Beibehalten der Zentrierung. Durch die gewählte sehr flache Steigung von 1:100 oder noch flacher kann das Aufweiten feinfühlig im µ-Bereich erfolgen.

Diese Bauweise stellt eine wesentliche Vereinfachung und Verbilligung gegenüber der bisher üblichen Ausführung dar, bei der das Pleuellager geschlitzt und verschraubt und auch der Bolzen an den Enden geschlitzt und mit Innenkegeln versehen sein mußte, in denen Kegel mittels Schrauben verspannt werden mußten.

Die Fig. 16 und 17 zeigen die Anwendung der Erfindung auf eine Nockenwelle mit den Merkmalen der Erfindung. Die Nockenwelle 44, von der hier nur ein Abschnitt dargestellt ist, besteht aus einer vorzugsweise hohlen Welle mit Außen-Dreikeilprofil. Auf diese Welle werden Nocken 45 mit Innen-Dreikeilprofil 46, die den Naben 3 der Ansprüche entsprechen, aufgeschoben und in der richtigen Position längs der Welle 44 mittels einer Drehvorrichtung aus der in Fig. 17 gestrichelt gezeichneten Ausgangsstellung um den Winkel B in die richtige Winkelstellung in Bezug auf die Nockenwelle gedreht. Das Innen-Dreikeilprofil der verschiedenen Nocken 45 ist jeweils in einer Winkelstellung eingebracht, die ein Erreichen des richtigen Nockenwinkels mit dem Verdrehwinkel der Keilverzahnung zwischen etwa 5° und 20° gewährleistet.

Die Drehvorrichtung weist vorteilhafterweise eine Drehmoment-Meßeinrichtung auf, mittels derer beim Eindrehen eines jeden Nockens in seinen Nockenwinkel überprüft werden kann, ob ein vorgesehenes Drehmoment erreicht und damit ein ausreichend fester Sitz des Nockes gewährleistet ist. Wenn dies nicht der Fall ist, liegt ein Fertigungsfehler vor und die Nockenwelle kann als fehlerhaft ausgeschieden werden. Auf diese Weise ist eine 100%ige Gütekontrolle gegeben. Die Drehvorrichtung kann mittels eines feinstufigen Schrittmotors angetrieben sein, mit dem die vorgesehene Winkelstellung mit großer Genauigkeit erreichbar ist. Die Drehmoment-Meßvorrichtung kann als Kraftmeßdose zwischen dem Schrittmotor und seiner Halterung ausgeführt sein. Besonders vorteilhaft erscheint eine Messung des vom Schrittmotor aufgenommenen Stroms, der dem ausgeübten Moment nahezu proportional ist.

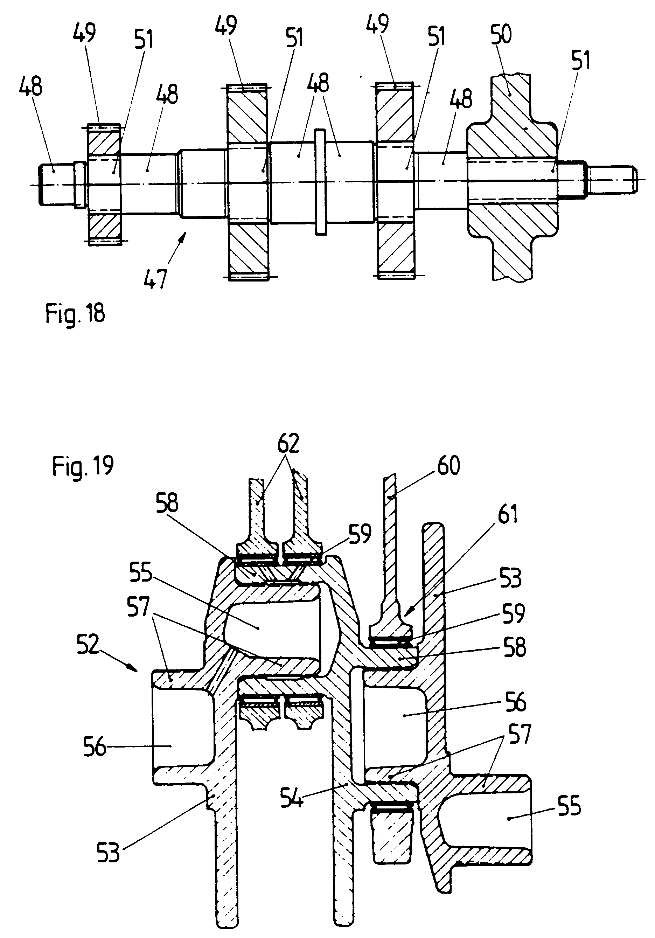

Die Erfindung erlaubt auch eine sehr vorteilhafte Ausführung einer Getriebewelle bspw. für ein Kraftfahrzeug-Schaltgetriebe, wie sie in Fig. 18 dargestellt ist. Bisher müssen die Zahnräder derartiger Getriebewellen erwärmt und mit 15-t-Pressen aufgedrückt werden. Die erfindungsgemäße Getriebewelle 47 weist zylindrische Bereiche 48 auf, an denen sie gelagert sein kann und deren Stirnseiten axiale Anlagen für Zahnräder 49 und einen Kupplungskörper 50 bilden. Zahnräder 49 und Kupplungskörper 50 stellen hier die Naben dar. In den Bereichen, in denen die Zahnräder 49 und der Kupplungskörper 50 sitzen, weist die Getriebewelle 47 das erfindungsgemäße Keilprofil 51 auf, dem Keilprofile in den Bohrungen der Zahnräder und des Kupplungskörpers entsprechen. Infolge der geringen Höhe des Keilprofils kann die erfindungsgemäße Getriebewelle mit geringerem Durchmesser und damit leichter ausgeführt werden als bisher üblich.

Zur Montage der Zahnräder 49 und des Kupplungskörpers 50 auf der Getriebewelle 47 werden diese Teile auf die Getriebewelle aufgesteckt und wie oben schon mehrfach beschrieben durch Verdrehen befestigt. Dabei kann das Keilprofil eines der Zahnräder 49 entgegengesetzt zu den Keilprofilen der anderen Zahnräder 49 orientiert sein, so daß dieses Zahnrad zum Gegenhalten der Getriebewelle beim Befestigen dieses und eines weiteren Zahnrades dienen kann. Auch hier kann durch Messen des zum Befestigen aufgewendeten Momentes ein Überwachen auf Erreichen des vorgesehenen Momentes und damit gleichzeitig mit dem Befestigen eine 100%ige Kontrolle aller aufgezogenen Zahnräder auf festen Sitz und damit aller gefertigten Getriebewellen erfolgen.

Das Ausführungsbeispiel nach Fig. 19 zeigt eine ausgeführte Kurbelwelle eines Verbrennungsmotors mit den Merkmalen der Erfindung. Die Kurbelwelle 52, von der hier nur ein Abschnitt dargestellt ist, besteht aus einer Mehrzahl von Wangen 53 einer ersten Art und und von Wangen 54 einer zweiten Art. Jede der Wangen 53 und 54 weist einem Pleuellagerzapfen 55 und einem Hauptlagerzapfen 56 auf. An den Wangen 53 der einen Art sind diese Zapfen als innen liegende (Hohl-)"Wellen" 57 mit Außen-Dreikeilprofil vorgesehen. Die Keilprofile sind in der Zeichnung durch Strichelung angedeutet. An den Wangen 54 der anderen Art sind die Zapfen als außen liegende "Naben" 58 mit Innen-Dreikeilprofil ausgeführt und tragen außen die Lagerflächen für die Innenringe der Wälzlager 59, auf denen die Kurbelwelle 52 in dem über einen Steg 60 mit dem Kurbelwellengehäuse verbundenen Hauptlager 61 bzw. die beiden Pleuel 62 eines Motors mit V-förmiger Zylinderanordnung gelagert sind. Die Wangen 53 und 54 können vorteilhaft in Gesenken feingeschmiedet und die Keilflächen sowie die Lagerflächen danach genau bearbeitet werden.

Beim Aufbau der Kurbelwelle 52 werden geschlossene Gleit- oder Wälzlager 59 sowie geschlossene Pleuel 62 ohne Verschraubung bspw. auf den (Naben-)Pleuellagerzapfen 55 einer Wange 54 aufgesteckt. Dann wird der (Wellen-)Pleuellagerzapfen 55 einer Wange 53 in den Pleuellagerzapfen 55 der Wange 53 eingesteckt und unter Aufbringen eines entsprechenden Drehmomentes in die Winkelstellung gedreht, in der die Hauptlagerzapfen 56 der beiden Wangen miteinander fluchten, m.a.W. die Kurbelwellenachse bilden. Die Winkellage der Keilprofile sind so gewählt, daß das erforderliche übertragbare Moment der Verbindung in der richtigen Winkelstellung benachbarter Wangen zueinander erreicht wird.

Dann wird das Wälzlager 59 eines Hauptlagers 61 auf den (Naben-)Hauptlagerzapfen 56 der Wange 54 aufgesteckt, der (Wellen-)Hauptlagerzapfen 56 einer Wange 53 in den Hauptlagerzapfen 55 der Wange 53 eingesteckt und unter Aufbringen eines entsprechenden Drehmomentes in die Winkelstellung gedreht, in der die Pleuellagerzapfen 55 dieser beiden Wangen im vorgesehenen Winkel zueinander stehen.

Dieser Vorgang wiederholt sich abwechselnd mit Wangen der beiden Arten (die äußeren dargestellten Wangen sind gleich) und gegebenenfalls mit Schwungrad, Steuerrad und Lichtmaschinenantriebsrad, bis die komplette Kurbelwelle vorliegt. Diese Bauart verringert durch Hohlstellen in den Wellen das Gewicht der Kurbelwelle und ermöglicht ein leichtes Austauschen von verschlissenen Lagern. Es erlaubt den Aufbau von Kurbelwellen mit beliebiger Anzahl von Pleuelkröpfungen aus zwei Arten von Wangen.

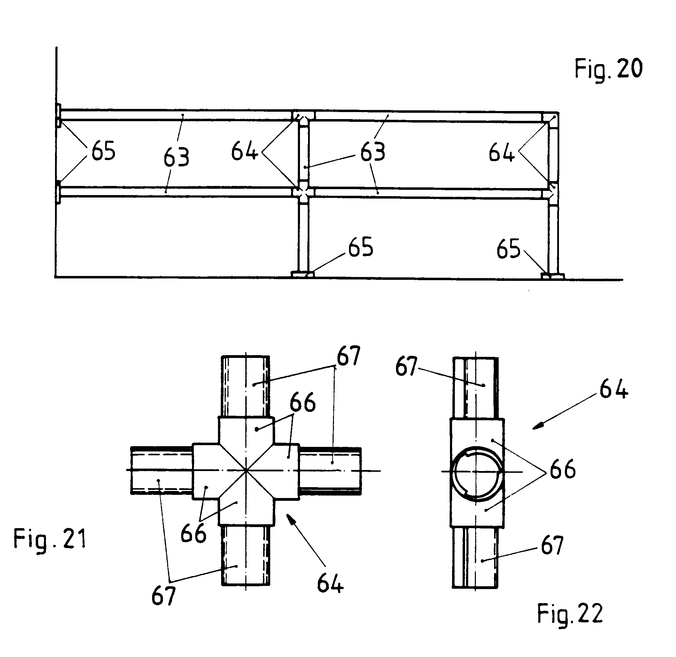

Für Rohrkonstruktionen wie Geländer an Treppen oder Maschinen, Spulengatter für Textilmaschinen, Leitern und dergl. können Rohre 63 bspw. eines Geländers nach Fig. 20 als Strangpreßprofile mit dem erfindungsgemäßen, innenliegenden Kreiskeilprofil und die zugehörigen Knotenteile 64 ( 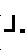 -, 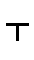 -, 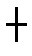 - und andere Teile) und Füße 65 mit dem entsprechenden Profil außen versehen sein. In den Fig. 21 und 22 ist dies an einem 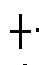 - Profil dargestellt. Der mittlere, vierstrahlige Bereich besteht aus zylindrischen Zapfen 66, an die sich Zapfen 67 mit dem erfindungsgemäßen Keilprofil anschließen. Die Länge dieser Zapfen 67 beträgt je nach Beanspruchung das 1...2fache des Durchmessers des Rohres 63. Die Steigung des Kreiskeilprofils ist den Materialeigenschaften, bspw. Leichtmetall, angepaßt und beträgt bspw. 1:50. Die Knotenteile 64 und die Füße 65 können vorteilhaft aus Stahl als Schmiedeteil mit kalibriertem Kreiskeilprofil oder in Druckguß oder Kunststoff-Spritzguß hergestellt werden.

Durch Ablängen von Rohrstücken 63 passender Länge, Einstecken der entsprechenden Knotenteile 64 bzw. Füße 65 und Verdrehen der Rohre und Teile gegeneinander können schnell und einfach beliebige Rohrkonstruktionen wie bspw. in Fig. 20 gezeigt aufgebaut werden. Weitere Befestigungsteile sind nicht erforderlich. Im Inneren der Rohre 63 liegendes Keilprofil wie in der Zeichnung dargestellt bedingt an Knotenstellen eine Unterbrechung im Rohr. Wenn das Profil in einer anderen, nicht dargestellten Ausführungsform außen am Rohr angebracht ist, kann ein Rohr über eine Knotenstelle durchlaufen.

## Patentansprüche

1. Welle-Nabe-Verbindung, bei welcher auf der Umfangsfläche der Welle (2) eine Mehrzahl keilförmiger Erhebungen (5) und auf der Innenfläche der Nabe (3) die gleiche Anzahl entsprechender keilförmiger Ausnehmungen angeordnet ist, dadurch gekennzeichnet, daß die Steigung der Keilflächen (7, 8) im wesentlichen dem Verlauf einer logarithmischen Spirale folgt und so flach ist, daß in Abhängigkeit von Material und Beschaffenheit der Oberflächen der Keilflächen sichere Selbsthemmung gegeben ist.

2. Welle-Nabe-Verbindung nach Anspruch 1, dadurch gekennzeichnet, daß die Steigung der Keilflächen (7, 8) 1/50 bis 1/200 beträgt.

3. Welle-Nabe-Verbindung nach Anspruch 1, dadurch gekennzeichnet, daß zusammenwirkende Keilflächen (7, 8) gleiche Steigung aufweisen.

4. Welle-Nabe-Verbindung nach Anspruch 1, dadurch gekennzeichnet, daß zusammenwirkende Keilflächen (7, 8) unterschiedliche Steigungen aufweisen.

5. Welle-Nabe-Verbindung nach Anspruch 1, dadurch gekennzeichnet, daß die Keilflächen (7, 8) zur Achse (17) von Welle (2) und Nabe geneigt sind.

6. Welle-Nabe-Verbindung nach Anspruch 1, dadurch gekennzeichnet, daß die Keilflächen (7, 8) schraubenförmig auf der Welle (2) bzw. in der Nabe angeordnet sind.

7. Welle-Nabe-Verbindung nach Anspruch 1, dadurch gekennzeichnet, daß mindestens drei Keilflächen (7, 8) auf der Welle (2) und in der Nabe (3) angeordnet sind.

8. Welle-Nabe-Verbindung nach Anspruch 1, dadurch gekennzeichnet, daß die Keilflächen (7, 8) auf einer auf die Welle (2) aufsetzbaren und/oder in die Nabe (3) einsetzbaren Manschette (18, 19) ausgebildet sind.

9. Welle-Nabe-Verbindung nach Anspruch 1, dadurch gekennzeichnet, daß mindestens eine der Keilflächen (7, 8) mit einer Mikroverzahnung versehen ist.

10. Welle-Nabe-Verbindung nach Anspruch 1, dadurch gekennzeichnet, daß die Keilflächen (7, 8) so behandelt sind, daß sich eine Kaltverschweißung zwischen Welle (2) und Nabe (3) ergibt.

11. Welle-Nabe-Verbindung nach Anspruch 1, dadurch gekennzeichnet, daß der sich nach einer Relativverschiebung zwischen Welle (2) und Nabe (3) ergebende Freiraum (9) verfüllt ist.

12. Welle-Nabe-Verbindung nach Anspruch 1, dadurch gekennzeichnet, daß durch die Wahl der Materialeigenschaft von Welle (2) und von Nabe (3) und/oder der Steigung der Keilflächen (7, 8) in Bezug auf ein maximal zulässiges übertragbares Drehmoment ein Durchrutschen der Welle in der Nabe möglich ist.

13. Welle-Nabe-Verbindung nach Anspruch 1, dadurch gekennzeichnet, daß sich an Welle (2) und Nabe (3) abstützende, verstellbare Keile (25) vorgesehen sind, durch deren Verstellen eine Relativverschiebung zwischen Welle und Nabe erzeugbar ist.

14. Welle-Nabe-Verbindung nach Anspruch 13, dadurch gekennzeichnet, daß die Keile (25) in Ausnehmungen (22) der Nabe (3) angeordnet sind und an den Keilrücken (27) der Keilflächen (7) der Welle (2) anliegen.

## Claims

1. Shaft-hub connection, in which a plurality of spline-shaped elevations (5) is arranged on the circumferential surface of the shaft (2) and the same number of corresponding spline-shaped recesses is arranged on the inner surface of the hub (3), characterized in that the pitch of the spline faces (7, 8) essentially follows the course of a logarithmic spiral and is so flat that secure self-locking is provided in dependence on the material and structure of the surfaces of the spline faces.

2. Shaft-hub connection according to Claim 1, characterized in that the pitch of the spline faces (7, 8) is 1/50 to 1/200.

3. Shaft-hub connection according to Claim 1, characterized in that interacting spline faces (7, 8) have the same pitch.

4. Shaft-hub connection according to Claim 1, characterized in that interacting spline faces (7, 8) have different pitches.

5. Shaft-hub connection according to Claim 1, characterized in that the spline faces (7, 8) are inclined relative to the axis (17) of the shaft (2) and the hub.

6. Shaft-hub connection according to Claim 1, characterized in that the spline faces (7, 8) are arranged helically on the shaft (2) and in the hub.

7. Shaft-hub connection according to Claim 1, characterized in that at least three spline faces (7, 8) are arranged on the shaft (2) and in the hub (3).

8. Shaft-hub connection according to Claim 1, characterized in that the spline faces (7, 8) are formed on a sleeve (18, 19) which can be fitted onto the shaft (2) and/or into the hub (3).

9. Shaft-hub connection according to Claim 1, characterized in that at least one of the spline faces (7, 8) is provided with a micro-toothing.

10. Shaft-hub connection according to Claim 1, characterized in that the spline faces (7, 8) are treated so as to result in a cold weld between the shaft (2) and the hub (3).

11. Shaft-hub connection according to Claim 1, characterized in that the gap (9) resulting after a relative displacement between the shaft (2) and the hub (3) is filled.

12. Shaft-hub connection according to Claim 1, characterized in that it is possible for the shaft to slip through in the hub due to the selection of the material property of the shaft (2) and of the hub (3) and/or the pitch of the spline faces (7, 8) in relation to a maximum permissible transmittable torque.

13. Shaft-hub connection according to Claim 1, characterized in that adjustable splines (25) are provided, which are supported on the shaft (2) and the hub (3) and by means of the adjustment of which a relative displacement can be produced between the shaft and the hub.

14. Shaft-hub connection according to Claim 13, characterized in that the splines (25) are arranged in recesses (22) in the hub (3) and bear against the spline backs (27) of the spline faces (7) of the shaft (2).

## Revendications

1. Liaison arbre-moyeu, dans laquelle sur la surface périphérique de l'arbre (2) est disposée une pluralité de bossages (5) cunéiformes et, sur la surface intérieure du moyeu (3) est disposé le même nombre d'évidements cunéiformes correspondants, caractérisée en ce que la pente des faces cunéiformes (7, 8) suit sensiblement l'allure d'une spirale logarithmique et cette pente est d'une faiblesse faisant qu'est produit un auto-blocage sûr, en fonction du matériau et de l'état de surface des faces cunéiformes.

2. Liaison arbre-moyeu selon la revendication 1, caractérisée en ce que la pente des faces cunéiformes (7, 8) est de 1/50 à 1/200.

3. Liaison arbre-moyeu selon la revendication 1, caractérisée en ce que des faces cunéiformes (7, 8) coopérantes présentent la même pente.

4. Liaison arbre-moyeu selon la revendication 1, caractérisée en ce que des faces cunéiformes (7, 8) coopérantes présentent des pentes différentes.

5. Liaison arbre-moyeu selon la revendication 1, caractérisée en ce que les faces cunéiformes (7, 8) sont inclinées par rapport à l'axe (17) de l'arbre (2) et du moyeu.

6. Liaison arbre-moyeu selon la revendication 1, caractérisée en ce que les faces cunéiformes (7, 8) sont disposées en hélices sur l'arbre (2), respectivement dans le moyeu.

7. Liaison arbre-moyeu selon la revendication 1, caractérisée en ce qu'on moins trois faces cunéiformes (7, 8) sont disposées sur l'arbre (2) et dans le moyeu (3).

8. Liaison arbre-moyeu selon la revendication 1, caractérisée en ce que les faces cunéiformes (7, 8) sont réalisées sur une manchette (18, 19) pouvant être enfilée sur l'arbre (2) et/ou insérée dans le moyeu (3).

9. Liaison arbre-moyeu selon la revendication 1, caractérisée en ce qu'au moins l'une des faces cunéiformes (7, 8) est pourvue d'une micro-denture.

10. Liaison arbre-moyeu selon la revendication 1, caractérisée en ce que les faces cunéiformes (7, 8) sont traitées de façon à réaliser un soudage à froid entre arbre (2) et moyeu (3).

11. Liaison arbre-moyeu selon la revendication 1, caractérisée en ce que l'espace libre (9) produit à la suite d'un déplacement relatif entre l'arbre (2) et le moyeu (3) est comblé.

12. Liaison arbre-moyeu selon la revendication 1, caractérisée en ce que, grâce au choix des propriétés du matériau de l'arbre (2) et du moyeu (3) et/ou de la pente des faces cunéiformes (7, 8), est rendu possible un glissement de l'arbre dans le moyeu, par rapport à un couple de rotation transmissible maximal admissible.

13. Liaison arbre-moyeu selon la revendication 1, caractérisée en ce que sont prévus des coins (25) réglables, prenant appui sur l'arbre (2) et le moyeu (3) et dont le réglage peut être opéré par déplacement relatif entre arbre et moyeu.

14. Liaison arbre-moyeu selon la revendication 13, caractérisée en ce que les coins (25) sont disposés dans des évidements (22) du moyeu (3) et prennent appui sur les dos de coin (27) des faces cunéiformes (7) de l'arbre (2).
